# EUROPÄISCHE PATENTANMELDUNG

(11) **EP 2 700 918 A1**
(43) Veröffentlichungstag der Anmeldung: **26.02.2014**
(21) Anmeldenummer: 12181497.4
(22) Anmeldetag: 23.08.2012
(51) Int. Cl.: G01G 21/30

(54) **Waage mit gasdurchlässigem Dichtmodul**

(71) Anmelder: Mettler-Toledo (Albstadt) GmbH, 72458 Albstadt (DE)
(72) Erfinder: Schoen, Thomas, 72458 Albstadt (DE); Türk, Frank, 72458 Albstadt (DE); Ringwald, Paul-Gerhard, 72458 Albstadt (DE)
(74) Vertreter: Mettler-Toledo

(57) **Zusammenfassung**

Waage (10) mit einem Schutzgehäuse (20), einer Lastaufnahme (30), einer im Schutzgehäuse (20) angeordneten Wägezelle (60) und einem Lastübertragungsmittel (40), mittels dessen die Lastaufnahme (30) und die Wägezelle (60) miteinander verbunden sind, wobei mittels des Lastübertragungsmittels (40) eine gravimetrische Kraft von der Lastaufnahme (30) zur Wägezelle (60) übertragbar ist, wobei das Schutzgehäuse (20) eine Aussparung (21) aufweist, durch die das Lastübertragungsmittel (40) geführt ist, ferner mittels eines in der Aussparung (21) angeordneten Dichtmoduls (50) das Gehäuse (20) im betriebsbereiten Zustand staubdicht und feuchtigkeitsdicht abgedichet ist. Dabei ist das Dichtmodul (50) gasdurchlässig, wodurch über das Dichtemodul (50) ein Druckausgleich zwischen dem Innern des Schutzgehäuses (20) und der Umgebungsathmosphäre erfolgen kann.

## Beschreibung

Die vorliegende Erfindung bezieht sich auf eine Waage mit Schutzgehäuse gemäss dem Oberbegriff des Anspruchs 1.

Waagen mit Schutzgehäusen werden typischerweise in industriellen Anwendungen eingesetzt. Ein typischer Einsatzort dieser Waagen ist in der Produktion von Lebensmitteln. In dieser Umgebung kommen die Waage und das Schutzgehäuse zur Aufnahme von elektronischen Bauteilen in direkten Kontakt mit den Lebensmitteln. Für die Reinigung dieser Waagen werden unter anderem Hochdruckreiniger verwendet. Es muss sichergestellt werden, dass das Schutzgehäuse während des Reinigungsvorgangs dicht ist und insbesondere keine Verunreinigungen in das Gehäuse eindringen können, da ansonsten die Wägezelle und/oder die elektronischen Bauteile im Innern des Gehäuses beschädigt werden können.

Eine weitere Anforderung an das Schutzgehäuse besteht darin, dass bei der Messung des Gewichts ein Druckausgleich zwischen dem Innern des Gehäuses und der Umgebungsathomsphäre erfolgen muss. Aus EP0516965 B1 ist beispielsweise eine Waage bekannt, die dieses Problem löst. Bei dieser Waage wird eine biegeweiche Membran zum Druckausgleich im Schutzgehäuse angeordnet. Die dort verwendete Membran ist gasdicht. Diese Anordnung stellt sicher, dass keine Verunreinigung wie beispielsweise Staub oder Feuchte in das Innere der Waage eindringen können. Damit der Druckausgleich erfolgen kann, muss sich die Membran auch kleinen Druckänderungen anpassen. Deshalb muss die Membran sehr biegeweich sein und eine genügend grosse Fläche aufweisen.

Für andere Messgeräte, wie beispielsweise Drucksensoren, ist bekannt dass der Druckausgleich über eine Gore-Tex Membran erfolgen kann. Dazu wird eine Aussparung des Gehäuses mit einer Gore-Tex Membran abgedichtet. Diese Gore-Tex Membran ist gasdurchlässig. Feuchtigkeit und/oder Staub kann jedoch nicht über diese Gore-Tex Membran in das Innere des Messgeräts eindringen. Ein Vorteil bei der Verwendung der Gore-Tex Membran besteht darin, dass die Membran starr sein kann und um Vergleich zur gasdichten biegeweichen Membran eine kleinere Fläche zum Druckausgleich notwendig ist.

Sowohl die biegeweise Membran als auch die Gore-Tex Membran weisen den Nachteil auf, dass für den Druckausgleich eine zusätzliche Aussparung im Gehäuse notwendig ist.

Es ist somit Aufgabe der Erfindung eine Waage zur Verfügung zu stellen die auf einfache Weise den Druckausgleich zwischen dem Innern der Waage und der Umgebungsathmosphäre sicher stellt, ohne dass Verunreinigungen in das Innere der Waage eindringen können.

Diese Aufgabe wird durch eine Waage gelöst, welches die im unabhängigen Patentanspruch angegebenen Merkmale aufweist. Weitere vorteilhafte Ausführungsformen können den abhängigen Ansprüchen entnommen werden.

Die erfindungsgemässe Waage weist ein Schutzgehäuse, ein Lastaufnahme, eine im Schutzgehäuse angeordneten Wägezelle und einem Lastübertragungsmittel auf. Mittels des Lastübertragungsmittels sind die Lastaufnahme und die Wägezelle miteinander verbunden, wobei mittels des Lastübertragungsmittels eine gravimetrische Kraft von der Lastaufnahme zur Wägezelle übertragbar ist. Dabei weist das Schutzgehäuse eine Aussparung auf, durch die das Lastübertragungsmittel geführt ist. Mittels eines in der Aussparung angeordneten Dichtmoduls ist das Gehäuse im betriebsbereiten Zustand staubdicht und feuchtigkeitsdicht abgedichtet. Erfindungsgemäss ist das das Dichtmodul gasdurchlässig, wodurch über das Dichtemodul ein Druckausgleich zwischen dem Innern des Schutzgehäuses und der Umgebungsathmosphäre erfolgen kann, ohne dass Staub und/oder Flüssigkeiten in das Innere der Waage eindringen können. Ein wesentlicher Vorteil dieser Anordnung besteht darin, dass über die ohnehin für das Lastübertragungsmittel notwendige Öffnung zusätzlich zum Ausgleich des Drucks verwendet werden kann. Dadurch ist keine zusätzliche Aussparung notwendig. Auch eine zusätzliche Abdichtung für diese zusätzliche Aussparung entfällt. Das Risiko einer Beschädigung dieser zusätzlichen Abdichtung und der damit verbundenen Kontamination des Innern der Waage entfällt. Infolgedessen ist die erfindungsgemässe Waage robuster in ihrer Anwendung und kostengünstiger in der Herstellung.

In einer vorteilhaften Ausführungsform ist das Lastübertragungsmittel in vertikaler Richtung beweglich und das Dichtmodul ist sowohl am Schutzgehäuse als auch am Lastübertragungsmittel befestigt. Unter vertikaler Richtung wird dabei die Schwerkraftrichtung verstanden. dabei in Schwerkraftrichtung angeordnet. Wird eine Last auf die Lastaufnahme gedrückt, wird das Lastübertragungsmittel in vertikaler Richtung nach unten gedrückt. Die Verschiebung des Lastübertragungsmittels wird an Wägezelle übertragen. Basierend auf der Verschiebung des Lastübertragungsmittels ermittelt die Wägezelle und an die Wägezelle angeordnete Elektronik das Gewicht der auf der Lastaufnahme sich befindlichen Last.

Vorteilhafterweise weist das Dichtmodul eine gaspermeable Membran auf, durch die Gase, jedoch keine Feuchte zwischen dem Innern des Gehäuses und der Umgebungsathmosphäre austauschbar sind. Dadurch wird sichergestellt, dass keine Feuchtigkeit in das Innere der Waage eindringen kann. Auch Flüssigkeiten können nicht in das Innere der Waage der gelangen. Gasförmiges Wasser hingegen kann die gaspermeable Membran passieren. Wird beim Zusammenbau der Waage versehentlich Feuchtigkeit im Innern der Waage eingeschlossen, kann das Wasser der Feuchtigkeit im gasförmigen Zustand die Membran passieren. Das Innere der Waage wird auf diese Weise langsam getrocknet. Auf diese Weise sind die Bauteile im Innern der Waage vor Feuchtigkeit geschützt und sind weniger stark korrosionsanfällig.

Die Membran weist eine Funktionstextilie mit besonderen Eigenschaften auf.

Vorteilhafterweise weist die Membran ein Gewebe auf, das Polyester und Karbon aufweist. Der Polyesteranteil ist vorteilhafterweise grösser als 95% und der Karbonanteil grösser als 2%. Das Flächengewicht des Gewebes ist vorteilhafterweise grösser als 95 g/m² und kleiner als 110 g/m². Die Luftdurchlässigkeit nach DIN 53 887 ist vorteilhafterweise bei 200 Pa grösser als 15 1/(min x dm²) und kleiner als 25 l/(min x dm²). Der Wasserdampfdurchgangswiderstand bei 35°C und einer relativen Luftfeuchtigkeit von 40% ist idealerweise grösser als 20 *10⁻³ m²mbar/V und kleiner als 35*10⁻³ m²mbar/V. Das Partikelrückhaltevermögen ist bevorzugterweise bei Partikeln grösser als 0.5 µm grösser als 75% und bei Partikeln grösser als 5.0 µm grösser als 80%. Die beiden Seiten des Gewebes weisen keine Unterschiede auf.

Ein vorteilhaftes Gewebe weist einen Polyesteranteil von ca. 98% und einen Karbonanteil von ca. 2% auf. Die Karbonfaser ist eine elektrisch leitende Faser. Der Abstand des Interalls der elektrisch leitenden Karbonfaser beträgt in Kette und Schass ca. 5mm. Die Karbonfasern sind in Sandwich-Konstruktion verarbeitet. Das Flächengewicht beträgt ca. 105 g/m², die Luftdurchlässigkeit nach DIN 53 887 beträgt bei 200 Pa ca. 20 l/(min x dm²). Der Wasserdampfdurchgangswiderstand bei 35°C und einer relativen Luftfeuchtigkeit von 40% beträgt ca. 32*10⁻³ m²mbar/V. Das Partikelrückhaltevermögen bei Partikeln grösser als 0.5 µm ist ca. 75% und bei Partikeln grösser als 5.0 µm ca. 95%.

Ein besonders vorteilhaftes Gewebe weist einen Polyesteranteil von ca. 98% und einen Karbonanteil von ca. 4% auf. Die Karbonfaser ist eine elektrisch leitende Faser. Der Abstand des Interalls der elektrisch leitenden Karbonfaser beträgt in Kette und Schass ca. 3mm. Die Karbonfasern sind in Mantel-Konstruktion verarbeitet. Das Flächengewicht beträgt ca. 100 g/m², die Luftdurchlässigkeit nach DIN 53 887 beträgt bei 200 Pa ca. 23 l/(min x dm²). Der Wasserdampfdurchgangswiderstand bei 35°C und einer relativen Luftfeuchtigkeit von 40% beträgt ca. 22.5*10⁻³ m²mbar/V. Das Partikelrückhaltevermögen bei Partikeln grösser als 0.5 µm ist ca. 83% und bei Partikeln grösser als 5.0 µm ca. 84%.

Idealerweise weist die gaspermeable Membran ein flexibles Gewebe auf.

In einer bevorzugten Ausführungsform ist die gaspermeable Membran im Wesentlichen planar ausgestaltet und weist einem Aussenrand und eine mit einem Innenrand begrenzte Öffnung auf. Dabei ist durch diese Öffnung im betriebsbereiten Zustand das Lastübertragungsmittel geführt. Vorzugsweise ist die gaspermeable Membran im betriebsbereiten Zustand im Wesentlichen horizontal ausgerichtet und ist somit im Wesentlichen orthogonal zum vertikal ausgerichteten Lastübertragungsmittel angeordnet. Um sicher zu stellen, dass keine Verunreinigungen in das Innere der Waage gelangen können, ist der Aussenrand der Membran gasdicht mit dem Gehäuse und der Innenrand gasdicht mit dem Lastübertragungsmittel verbunden.

Der Innenrand der gaspermeablen Membran kann fest mit dem Lastübertragungsmittel verbunden sein. Somit bewegt sich der Innenrand beim Lastübertragung zusammen mit dem Lastübertragungsmittel mit. Diese Verbindungsform ermöglicht eine gasdichte Verbindung von Lastübertragungsmittel in Innenrand der Membran. Das erste Klemmelement ist fest mit dem Lastübertragungsmittel verbunden. In einer bevorzugten Ausführungsform erfolgt die Verbindung mittels einer durch Schrauben fixierte Scheibe. Es sind auch alternative Verbindungsformen wie beispielsweise Nietverbindungen und/oder Klebeverbindungen möglich.

Gerade bei hohen Genauigkeitsanforderungen kann die am Lastübertragungsmittel befestigte Membran einen verfälschenden Einfluss auf das Messergebnis haben. Um diesen negativen Einfluss zu vermeiden ist die Membran idealerweise aus einem biegeweichen Material ohne nennenswerten Widerstand gefertigt. Zudem sollte die Membran derart eingebaut werden dass während des gesamten Wägevorgang keine, oder nur geringe, Spannungen auftreten, die einen verfälschenden Einfluss auf das Messergebnis haben.

In einer vorteilhaften Ausführungsform ist der Innenrand des Dichtmoduls im Wesentlichen kreisförmig ist und das erste Klemmelement ist ebenfalls mehrheitlich kreisförmig ist. Bei dieser Anordnung weist der Innenrand und das Klemmelement keine Ecken auf und ist deshalb einfacher zu befestigen und abzudichten.

In einer vorteilhaften Ausführungsform ist der Aussenrand der gaspermeablen Membran mittels eines zweiten Klemmelements gasdicht mit dem Schutzgehäuse verbunden ist. Dabei ist der Aussenrand des Dichtmoduls im Wesentlichen kreisförmig ist und das zweite Klemmelement ein Klemmring ist.

Der Aussenrand und der Innenrand der gaspermeablen Membran sind im Wesentlichen konzentrisch, wodurch die gaspermeable Membran im Wesentlichen die Form eines Kreisrings aufweist.

Einzelheiten der erfindungsgemässen Dosiervorrichtung ergeben sich anhand der Beschreibung der in den Zeichnungen dargestellten Ausführungsbeispiele. Es zeigen:
- Fig. 1: isometrisches Darstellung der erfindungsgemässen Waage 10;
- Fig. 2: einen vertikalen Schnitt durch die erfindungsgemässe Waage 10 und
- Fig. 3: Explosionsdarstellung der erfindungsgemässen Waage 10.

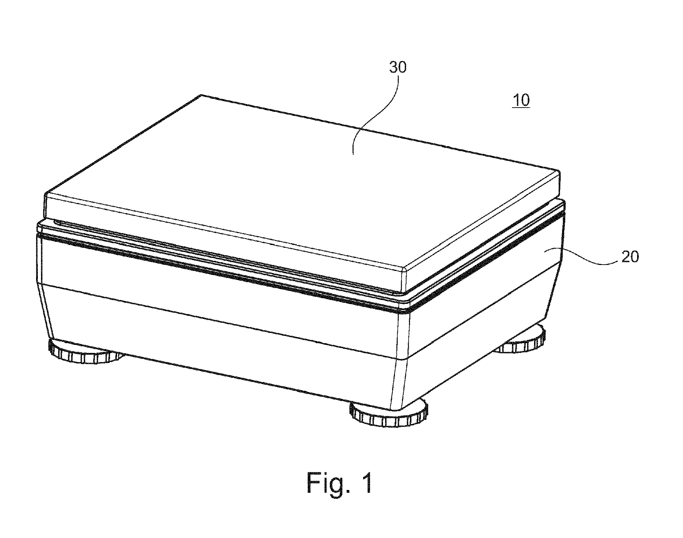

Figur 1 zeigt eine isometrische Darstellung der erfindungsgemässen Waage 10. Die Waage 10 weist ein Schutzgehäuse 20 und eine Lastaufnahme 30 auf.

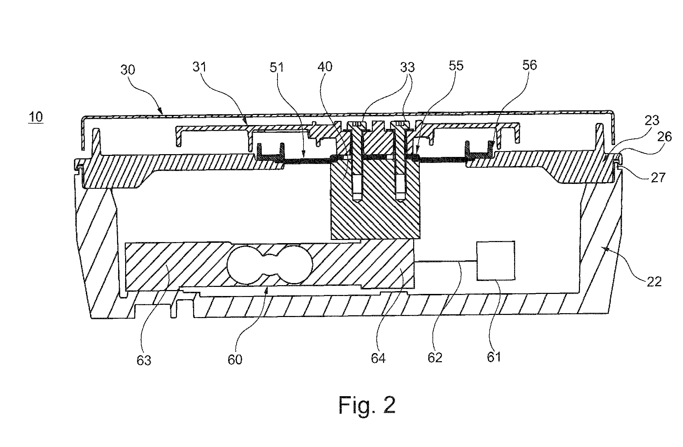

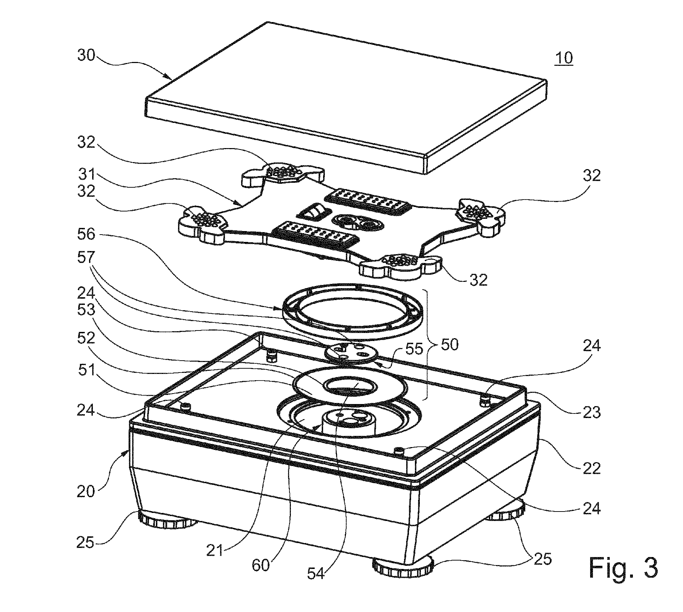

In den Figuren 2 und 3 wird der Aufbau der erfindungsgemässen Waage veranschaulicht. Figur 2 zeigt einen vertikalen Schnitt durch die erfindungsgemässe Waage 10 und Figur 3 zeigt eine Explosionsdarstellung der erfindungsgemässen Waage 10.

Beim Wägevorgang wird das zu wiegende Gut auf die Lastaufnahme 30 gelegt. Die Lastaufnahme 30 bewegt sich in Abhängigkeit vom Gewicht der Last in vertikaler Richtung entgegen der Schwerkraftrichtung nach unten. Diese Bewegung wird mittels des Lastübertagungsmittels 40 an den Lastaufnahmebereich 63 der Wägezelle 60 übermittelt, wodurch sich der Lastaufnahmebereich 63 nach unten verschiebt. Mittels des mit der Wägezelle 60 verbundenen Elektronikmoduls 61 und der vertikalen Verschiebung des Lastaufnahmebereich 63 und eventuell anderer Einflussfaktoren, wie beispielsweise Temperatur, wird der Gewichtswert der sich auf der Lastaufnahme 30 befindenden Last bestimmt. Der vom Elektronikmodul 61 bestimmte Gewichtswert wird an, nicht dargestellte, Peripheriegeräte übermittelt. Mögliche Peripheriegeräte sind beispielsweise Monitore, Drucker und/oder Datenspeichermodule.

Die Waage 10 weist ein Schutzgehäuse 20 auf, das im Wesentlichen aus einem Basisteil 22 und einem Oberteil 23 besteht. Das Basisteil 22 ist muldenförmig ausgestaltet und ist nach oben offen. Das nach oben offene Basisteil 22 kann mittels eines Oberteils 23 verschlossen werden. Die Verbindung zwischen Basisteil 22 und Oberteil 23 muss derart ausgestaltet sein, dass weder Staub noch Feuchtigkeit in das Innere des Schutzgehäuses 20 eindringen können. Bei der erfindungsgemässen Waage 10 wird hierzu eine mit einer Dichtung versehen Feder-Nut Verbindung verwendet. Das Basisteil 22 weist eine Feder 27 auf, die mit einer Nut 26 des Oberteils 23 zusammenwirkt. Es sind natürlich auch Ausführungsformen möglich bei denen das Basisteil eine Nut und das Oberteil eine Feder aufweist. Bei der erfindungsgemässen Waage ist die Feder 27 des muldenförmigen Basisteils 22 im Wesentlichen rechteckig ausgestaltet und deren Rand ist im betriebsbereiten Zustand der Waage 10 in einer horizontal ausgerichteten Ebene angeordnet.

Im Innern des Schutzgehäuses 20 sind eine Wägezelle 60 und mindestens ein Elektronikmodul 61 angeordnet, welche mittels eines Übertragungsmittels 62 miteinander verbunden sind. Das Elektronikmodul 61 enthält mindestens ein nicht näher dargestelltes Signalverarbeitungsmodul, gegebenenfalls auch ein Steuerungs- und/oder Regelungsmodul. Die Wägezelle 60 weist mindestens einen feststehenden Bereich 63 und einen Lastaufnahmebereich 64 auf. Bekannte Wägezellentypen sind beispielsweise mit Dehnungsmessstreifen bestückte elastische Verformungskörper, Wägezellen die nach dem Prinzip der elektromagnetischen Kraftkompensation arbeiten, Wägezellen mit Schwingsaiten, kapazitive Wägesensoren und dergleichen.

Der feststehende Bereich 63 ist mit dem Schutzgehäuse 20 fest verbunden und am Lastaufnahmebereich 64 ist ein Lastübertragungsmittel 40 angeordnet, welches die Lastaufnahme 30 mit dem Lastaufnahmebereich 64 der Wägezelle 60 verbindet. Zwischen der Lastaufnahme 30 und dem Lastübertragungsmittel 40 kann eine Lastaufnahmeauflage 31 zur stabilen Lagerung der Lastaufnahme 30 angeordnet sein. Die Lastaufnahmeauflage 31 weist eine im betriebsbereiten Zustand im Wesentlichen horizontal ausgerichtete Fläche auf, die mit Auflageflächen 32 zur stabilen Auflage der Lastaufnahme 30 versehen ist.

Die Lastaufnahmeauflage 31 ist im betriebsbereiten Zustand mittels einer Schraubverbindung 33 fest mit dem Lastübertragungsmittel 40 verbunden. Zu Wartungszwecken kann die Lastaufnahmeauflage 31 durch lösen der Schraubverbindung 33 entfernt werden.

Die Lastaufnahme 30 liegt lose auf der Lastaufnahmeauflage 31 auf und ist werkzeuglos entfernbar. Diese Ausgestaltung bietet den Vorteil, dass die Lastaufnahme 30 beispielsweise zu Reinigungszwecken einfach entfernbar ist.

Das Lastübertragungsmittel 40 ist zwischen der Lastaufnahme 30 und der Wägezelle 60 angeordnet. Das Lastübertragungsmittel 40 muss vom Äusseren des Schutzgehäuses 20, der Umgebungsathmosphäre, in das Innere des Schutzgehäuses 20 geführt werden. Für diesen Zweck weist das Schutzgehäuse 20 eine Aussparung 21 auf.

Da das Lastübertragungsmittel 40 während des Wägevorgangs in vertikaler Richtung beweglich sein muss, darf der Rand der Aussparung 21 das Lastübertragungsmittel 40 nicht berühren. Infolgedessen sind Rand der Aussparung 21 und das Lastübertragungsmittel 40 voneinander beabstandet, das heisst es besteht eine Öffnung zum Innern des Schutzgehäuses 20. Um das Eindringen von Staub und Feuchtigkeit zu verhindern ist diese Öffnung mittels eines Dichtmoduls 50 abgedichtet.

Die Aussparung 21 und der Querschnitt in horizontaler Richtung des Lastübertragungsmittels 40 sind im Wesentlichen kreisförmig. Das kreisförmige Lastübertragungsmittel 40 und die kreisförmige Aussparung 21 sind im Wesentlichen konzentrisch angeordnet. Dadurch entsteht kreisringförmige Aussparung zwischen Lastübertragungsmittel 40 und Schutzgehäuse 20.

Zum Abdichten dieser kreisringförmigen Aussparung wird ein kreisringförmiges Dichtelement 51 zwischen Lastübertragungsmittel 40 und Schutzgehäuse 20 angeordnet. Im betriebsbereiten Zustand ist das Dichtelement 51 im Wesentlichen horizontal ausgerichtet. Das Dichtelement 51 ist im Wesentlichen planar ausgestaltet.

Das Dichtelement 51 weist eine Innenkante 53 und eine Aussenkante 52 auf. Die Innenkante 53 des Dichtelements 51 ist im betriebsbereiten Zustand fest mit dem Lastübertragungsmittel 40 verbunden. Bei der erfindungsgemässen Waage 10 wird hierzu ein erstes Klemmelement 55 in Form eines inneren Klemmrings verwendet. Das erste Klemmelement 55 ist im betriebsbereiten Zustand der Waage 10 mittels einer Schraubverbindung 57 mit dem Lastübertragungsmittel 40 verbunden. Zu Wartungszwecken kann die Schraubverbindung 57 gelöst werden um den inneren Klemmring zu entfernen.

Die Aussenkante 52 des Dichtelements 51 ist im betriebsbereiten Zustand fest mit dem Schutzgehäuse 20 verbunden. Bei der erfindungsgemässen Waage 10 wird hierzu ein zweites Klemmelement 56 in Form eines äusseren Klemmrings verwendet. Das zweite Klemmelement 56, das im Wesentlichen als Kreisring ausgestaltet ist, ist im betriebsbereiten Zustand der Waage 10 mittels einer Schraubverbindung mit dem Lastübertragungsmittel 40 verbunden. Zu Wartungszwecken kann die Schraubverbindung gelöst werden um den äusseren Klemmring zu entfernen. Sowohl der Rand der Aussparung 21, der innere Klemmring, der äussere Klemmring als auch das Dichtelement 51 sind im betriebsbereiten Zustand im Wesentlichen horizontal angeordnet.

Das Dichtelement 51, das erstes Klemmelement 55 und das zweite Klemmelement 56 bilden das Dichtmodul 50.

Da die Innenkante 53 des Dichtelements 51 über das erste Klemmelement 55 fest mit dem beweglich gelagerten Lastübertragungsmittel 40 und die Aussenkante 52 des Dichtelements 51 über das zweite Klemmelement 56 fest mit dem feststehenden Schutzgehäuse 20 verbunden ist, wird während des Wägevorgangs die Innenkante 53 des Dichtelements 51 nach unten verschoben. Die Aussenkante 52 des Dichtelements 51 bewegt sich jedoch nicht. Dadurch deformiert sich das Dichtelement 51 während des Wägevorgangs und es können Spannungen im Dichtelement 51 auftreten, die einen verfälschenden Einfluss auf das Wägeresultat ausüben können.

Es ist deshalb sicher zu stellen, dass im Dichtmodul 50 auftretenden Spannungen nur einen im Toleranzbereich liegenden Einfluss auf das Wägeresultat haben. Es ist deshalb von Vorteil ein flexibles, biegeweiches Material für das Dichtelement 51 zu verwenden und beim Einbau darauf zu achten, dass keine Spannungen auftreten.

Das Schutzgehäuse 20, das Lastübertragungsmittel 40 und das Dichtmodul 50 schliessen das Innere des Schutzgehäuses 20 staubdicht und feuchtedicht ein.

Während des Wägevorgangs sollte im Inneren des Schutzgehäuses der gleiche Druck vorliegen wie in der Umgebungsathmosphäre. Liegt im Schutzgehäuse einer vom Umgebungsdruck abweichender Druck vor, kann dadurch das Wägeresultat verfälscht werden. Es muss deshalb ein Druckausgleich zwischen Innern des Schutzgehäuses 20 und Umgebungsathmosphäre erfolgen. Bei der erfindungsgemässen Waage erfolgt der Druckausgleich über das Dichtelement 51. Dies ist möglich da das Dichtelement 51 eine Membran aufweist die gaspermeable ist. Flüssigkeiten hingegen können die Membran nicht passieren. Die unter dem Namen ION-NOSTAT V und ION-NOSTAT Plus bekannten Membranen, haben sich als besonders vorteilhaft erwiesen. Es ist natürlich auch möglich andere Funktionstextilien mit äquivalenten Eigenschaften zu verwenden.

Das Schutzgehäuse 20 weist ausser der Aussparung 21 zum Durchführen des Lastübertragungsmittels 40 keine weiteren Öffnungen auf. Das Schutzgehäuse weist insbesondere keine zusätzliche Öffnung auf, über die ein Druckausgleich zwischen dem Innern des Schutzgehäuses 20 und der Umgebungsathmosphäre erfolgen kann. Druckausgleich erfolgt stattdessen ausschliesslich über das Dichtmodul 50. Dies bietet den Vorteil, dass weder eine zusätzliche Aussparung mit einer zusätzlichen Dichtung, noch eine zusätzliches Druckausgleichmittel erforderlich ist.

Die in den Figuren 1 bis 3 dargestellte Waage stellt nur eine mögliche Ausführungsform der erfindungsgemässen Waage dar. Es sind natürlich weitere Ausführungsformen möglich.

Bei der dargestellten Ausführungsform werden ein rundes Lastübertragungsmittel 40 und eine runde Aussparung 21 verwendet. Es ist jedoch auch möglich andere Formen zu verwenden, insofern das Dichtmodul eine Abdichtung zwischen dem Lastübertragungsmittel und dem Rand der Aussparung sicherstellt.

### Bezugszeichenliste

- 10: Waage
- 20: Schutzgehäuse
- 21: Aussparung im Schutzgehäuse
- 22: Basis des Schutzgehäuses
- 23: Oberteil des Schutzgehäuses
- 24: Befestigungsmittel
- 25: Füsse
- 26: Nut
- 27: Feder
- 30: Lastaufnahme
- 31: Lastaufnahmenauflage
- 32: Auflagefläche der Lastaufnahmenauflage
- 33: Schraubverbindung
- 40: Lastübertragungsmittel
- 50: Dichtmoduls
- 51: Flexibles Dichtelement
- 52: Aussenkante des Dichtelements
- 53: Innenkante des Dichtelements
- 54: Oeffnung im Dichtelement
- 55: Erstes Klemmelement
- 56: Zweites Klemmelement
- 57: Schraubverbindung
- 60: Wägezelle
- 61: Elektronikmodul
- 62: Uebertragungsmittel
- 63: feststehender Bereich der Wägezelle
- 64: Lastaufnahmebereich der Wägezelle

## Patentansprüche

1. Waage (10) mit einem Schutzgehäuse (20), einer Lastaufnahme (30), einer im Schutzgehäuse (20) angeordneten Wägezelle (60) und einem Lastübertragungsmittel (40), mittels dessen die Lastaufnahme (30) und die Wägezelle (60) miteinander verbunden sind, wobei mittels des Lastübertragungsmittels (40) eine gravimetrische Kraft von der Lastaufnahme (30) zur Wägezelle (60) übertragbar ist, wobei das Schutzgehäuse (20) eine Aussparung (21) aufweist, durch die das Lastübertragungsmittel (40) geführt ist, ferner mittels eines in der Aussparung (21) angeordneten Dichtmoduls (50) das Gehäuse (20) im betriebsbereiten Zustand staubdicht und feuchtigkeitsdicht abgedichet ist, **dadurch gekennzeichnet, dass** das Dichtmodul (50) gasdurchlässig ist, wodurch über das Dichtemodul (50) ein Druckausgleich zwischen dem Innern des Schutzgehäuses (20) und der Umgebungsathmosphäre erfolgen kann.

2. Waage (10) nach Anspruch 1, **dadurch gekennzeichnet, dass** das Lastübertragungsmittel (40) in vertikaler Richtung beweglich ist und das Dichtmodul (50) sowohl am Schutzgehäuse (20) als auch am Lastübertragungsmittel (40) befestigt ist.

3. Waage (10) nach einem der vorangehenden Ansprüche, **dadurch gekennzeichnet, dass** das Dichtmodul (50) eine gaspermeable Membran (51) aufweist, durch die Gase, jedoch keine Feuchte zwischen dem Innern des Gehäuses (20) und der Umgebungsathmosphäre austauschbar sind.

4. Waage (10) nach Anspruch 3, **dadurch gekennzeichnet, dass** die gaspermeable Membran (51) einen Karbonanteil von mindestens 2% aufweist.

5. Waage (10) nach Anspruch 3 oder 4, **dadurch gekennzeichnet, dass** die gaspermeable Membran (51) ein flexibles Gewebe aufweist.

6. Waage (10) nach einem der Ansprüche 3 bis 5, **dadurch gekennzeichnet, dass** die gaspermeable Membran (51) im Wesentlichen planar ausgestaltet ist und einem Aussenrand (53) und eine mit einem Innenrand (52) begrenzte Öffnung (54) aufweist, wobei durch diese Öffnung (54) im betriebsbereiten Zustand das Lastübertragungsmittel (40) geführt ist.

7. Waage nach Anspruch 6, **dadurch gekennzeichnet, dass** die gaspermeable Membran (51) im betriebsbereiten Zustand im Wesentlichen horizontal ausgerichtet ist.

8. Waage (10) nach einem der Ansprüche 6 bis 7, **dadurch gekennzeichnet, dass** der Innenrand (52) der gaspermeable Membran (51) mittels eines ersten Klemmelementes (55) gasdicht mit dem Lastübertragungsmittel (40) verbunden ist.

9. Waage nach Anspruch 6 oder 8, **dadurch gekennzeichnet, dass** in der gaspermeable Membran (51) im betriebsbereiten Zustand im Wesentlichen keine Spannungen auftreten.

10. Waage (10) nach Anspruch 9, **dadurch gekennzeichnet, dass** der Innenrand (52) der gaspermeablen Membran (51) mit dem Lastübertragungsmittel (40) in vertikaler Richtung beweglich ist.

11. Waage (10) nach Anspruch 9 oder 10, **dadurch gekennzeichnet, dass** der Innenrand (52) des Dichtmoduls (50) im Wesentlichen kreisförmig ist und das erste Klemmelement (55) mehrheitlich kreisförmig ist.

12. Waage (10) nach einem der Ansprüche 9 bis 11, **dadurch gekennzeichnet, dass** das erste Klemmelement (55) fest mit dem Lastübertragungsmittel (40) verbunden ist.

13. Waage (10) nach einem der vorangehenden Ansprüche, **dadurch gekennzeichnet, dass** der Aussenrand (53) der gaspermeablen Membran (51) mittels eines zweiten Klemmelements (56) gasdicht mit dem Schutzgehäuse (20) verbunden ist.

14. Waage (10) nach Anspruch 12, **dadurch gekennzeichnet, dass** der Aussenrand (53) des Dichtmoduls (50) im Wesentlichen kreisförmig ist und das zweite Klemmelement (56) ein Klemmring ist.

15. Waage (10) nach einem der vorangehenden Ansprüche, **dadurch gekennzeichnet, dass** die gaspermeable Membran (51) im Wesentlichen die Form eines Kreisrings aufweist.
